# EUROPEAN PATENT APPLICATION

(11) **EP 4 760 865 A1**
(43) Date of publication of application: **17.06.2026**
(21) Application number: 24872869.3
(22) Date of filing: 24.09.2024
(51) Int. Cl.: H01M 10/48, H01M 10/42, H01M 50/256, H01M 50/264, G06K 7/10, G06K 19/06, G01S 17/88

(54) **BATTERY CELL TRAY**

(30) Priority: 27.09.2023 KR 20230131081
(71) Applicant: LG Energy Solution, Ltd., Seoul 07335 (KR)
(72) Inventor: LEE, Jeong Min, Daejeon 34122 (KR)
(74) Representative: Plasseraud IP
(86) International application number: PCT/KR2024/014404
(87) International publication number: WO 2025/071161

(57) **Abstract**

The present disclosure relates to a battery cell tray, and more specifically, to a battery cell tray for storing and transferring loaded battery cells. A battery cell tray according to Embodiment 1 of the present disclosure includes a cell fixing unit to which battery cells are fixed; a position measuring unit that measures the position of each of the battery cells inserted into the cell fixing unit; and a processor that calculates the fixed position of each of the battery cells fixed to the cell fixing unit through data measured by the position measuring unit, thereby being capable of automatically measuring the positions of battery cells inserted into the cell fixing unit to determine the fixed positions at which the battery cells are fixed within the cell fixing unit.

## Description

### TECHNICAL FIELD

### CROSS-REFERENCE TO RELATED APPLICATIONS

The present application claims priority to Korean Patent Application No. 10-2023-0131081 filed on September 27, 2023 in the Republic of Korea, the disclosures of which are incorporated herein by reference.

### TECHNICAL FIELD

The present disclosure relates to a battery cell tray, and more specifically, to a battery cell tray for storing and transferring loaded battery cells.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may be used in the form of a battery cell, and the battery cell may have a form in which a plurality of electrodes are alternately stacked with a separator interposed therebetween within an exterior material, and the inner space of the exterior material is filled with an electrolyte solution. At this time, the assembled battery cells are stored in a battery tray until the quality product is shipped, and may be transferred while loaded on the battery tray.

In conventional battery trays, fixing plates that fix the inserted battery cells are injected, and the operator separately records the ID of the battery cell and the location of each fixing plate to which the battery cell is fixed to distinguish the battery cells.

In this case, the operator should separately record the ID of the battery cell as many as the number of battery cells fixed to the fixing plate, which increases the workload, resulting in a problem of reducing productivity.

Additionally, there was a problem of management errors of the battery cells because the operator may incorrectly enter the ID of the battery cell or may miss entering the ID of the battery cell.

### SUMMARY

### TECHNICAL PROBLEM

The present disclosure is designed to solve the problems of the related art, and therefore the present disclosure is directed to providing a battery cell tray capable of automatically determining the position of each of the loaded battery cells.

### TECHNICAL SOLUTION

A battery cell tray according to Embodiment 1 of the present disclosure includes a cell fixing unit to which battery cells are fixed; a position measuring unit that measures the positions of each of the battery cells inserted into the cell fixing unit; and a processor that calculates the fixed position of each of the battery cells fixed to the cell fixing unit through data measured by the position measuring unit.

The battery cell tray may further include a frame spaced apart from the cell fixing unit, through which the battery cells inserted into the cell fixing unit pass; and a connecting member that connects the cell fixing unit and the frame.

The frame may include a pair of inner surfaces facing each other with the battery cells interposed therebetween.

The position measuring unit may include a barcode scanner that reads the barcode of the battery cell inserted into the cell fixing unit; and a position measuring sensor that measures the position of the battery cell inserted into the cell fixing unit.

The position measuring sensor may be a LiDAR sensor that measures a distance to the battery cell inserted into the cell fixing unit.

The barcode scanner and the position measuring sensor may be installed in the frame.

The barcode scanner and the position measuring sensor may be installed at a position higher than the upper end of the battery cell fixed to the cell fixing unit among the inner surfaces of the frame.

The processor may calculate the fixed position of each of the battery cells fixed to the cell fixing unit by comparing a distance from the position measuring sensor to the battery cell inserted into the cell fixing unit with a preset reference distance.

The reference distance may be a distance between the position measuring sensor attached to the first inner surface of the frame and a second inner surface facing the first inner surface.

Meanwhile, in the battery cell tray according to Embodiment 2 of the present disclosure, the cell fixing unit includes a fixing unit formed with a plurality of coupling grooves into which the battery cells are fitted; and a base plate on which the fixing unit is installed.

The plurality of coupling grooves may be formed in a row along the length direction of the fixing unit.

Lead moving lines through which the electrode leads of the battery cell pass may be formed on each of one side and the other side of the coupling grooves.

The fixing unit may be attached to and installed on the surface of the base plate.

### ADVANTAGEOUS EFFECTS

A battery cell tray according to Embodiment 1 of the present disclosure includes a cell fixing unit to which battery cells are fixed, a position measuring unit that measures the position of each of the battery cells inserted into the cell fixing unit, and a processor that calculates the fixed position of each of the battery cells fixed to the cell fixing unit through data measured by the position measuring unit, thereby having an advantageous effect of automatically measuring the positions of battery cells inserted into the cell fixing unit to determine the fixed positions at which the battery cells are fixed within the cell fixing unit.

### BRIEF DESCRIPTION OF THE DRAWINGS

FIG. 1 is a perspective view of a battery cell tray according to Embodiment 1 of the present disclosure.
FIG. 2 is a view showing a state in which a position measuring unit measures the ID and position of a battery cell inserted in a battery cell tray according to Embodiment 1 of the present disclosure.
FIG. 3 is a plan view of a battery cell tray according to Embodiment 2 of the present disclosure.
FIG. 4 is a right side view of a battery cell tray according to Embodiment 2 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery cell tray according to the present disclosure will be described with reference to the drawings.

### Embodiment 1

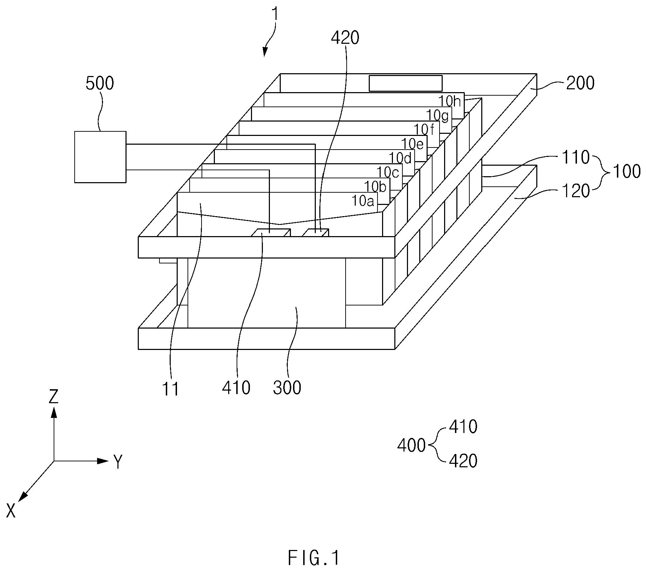

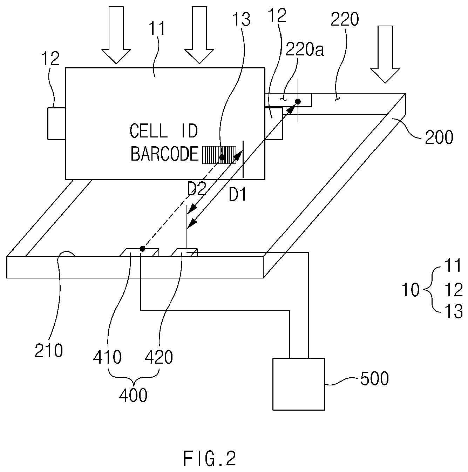

FIG. 1 is a perspective view of a battery cell tray according to Embodiment 1 of the present disclosure, and FIG. 2 is a view showing a state in which a position measuring unit measures the ID and position of a battery cell inserted in a battery cell tray according to Embodiment 1 of the present disclosure.

Referring to FIGS. 1 and 2, a battery cell tray 1 according to Embodiment 1 of the present disclosure includes a cell fixing unit 100 to which battery cells 10 are fixed, a position measuring unit 400 that measures the position of each of the battery cells 10 inserted into the cell fixing unit 100, and a processor 500 that calculates the fixed position of each of the battery cells 10 fixed to the cell fixing unit 100 through data measured by the position measuring unit 400. In this case, the position measuring unit 400 automatically measures the positions of the battery cells 10 inserted into the cell fixing unit 100, and the processor 500 uses the measured position data to determine the positions of the battery cells 10 fixed to the cell fixing unit 100, so that there is an advantageous effect of automatically determining the fixed position of each of the battery cells 10 fixed to the battery cell tray 1.

The battery cell 10 is a secondary battery that can be charged and discharged, and may include an electrode assembly in which electrodes are alternately stacked with a separator therebetween, an exterior material 11 that surrounds the electrode assembly, and a pair of electrode leads 12 that are connected to electrode tabs of the electrode assembly and protrude outward from the exterior material 11.

A sealing member is interposed between the exterior material 11 and the electrode leads 12, and the inside of the exterior material 11 may be filled with an electrolyte solution. In this case, the electrode assembly may be accommodated in the exterior material 11 in a state of being impregnated with the electrolyte solution.

The exterior material 11 may have various structures. For example, the exterior material 11 may be an empty cuboidal-shaped metal case in which a receiving space for accommodating the electrode assembly is formed. In this case, the battery cell 10 may be a prismatic battery cell. Additionally, a barcode 13 in which the ID of the battery cell 10 is entered may be formed on the exterior material 11.

The electrode leads 12 are connected to electrode tabs of the electrode assembly, and may electrically connect electrodes inside the battery cell 10 to the outside. The electrode leads 12 are composed of a positive electrode lead connected to the positive electrode tab and a negative electrode lead connected to the negative electrode tab, and a portion of the electrode leads 12 may protrude to the outside of the exterior material 11.

Meanwhile, the battery cell 10 may be a bidirectional battery cell or a unidirectional battery cell. When the battery cell 10 is a bidirectional battery cell, the electrode leads 12 may protrude to one side and the other side of the exterior material 11, respectively. Additionally, when the battery cell 10 is a unidirectional battery cell, the electrode leads 12 may protrude only to one side of the exterior material 11.

The battery cell tray 1 is a carrier that stores and transfers the assembled battery cells 10 until shipment, and the battery cell tray 1 may include a battery cell fixing unit 100 that fixes and supports the inserted battery cells 10.

The cell fixing unit 100 fixes and supports the battery cells 10 inserted into the battery cell tray 1, and the cell fixing unit 100 may include a fixing unit 110 that fixes the battery cells 10 inserted into the battery cell tray 1 and a base plate 120 on which the fixing unit 120 is installed.

The fixing unit 110 fixes a plurality of battery cells 10, and may be configured in various ways. For example, a plurality of separate cell insertion spaces in which each of the inserted battery cells 10 is seated may be formed in the fixing unit 110, and the fixing unit 110 may include a clamping member that clamps and fixes each of the battery cells 10 inserted into the battery cell tray 1.

The base plate 120 is an installation plate on which the fixing unit 110 is installed, and may be configured in various ways. For example, the base plate 120 may include a flat stage on which the fixing unit 110 is installed and a wall portion protruding upward that surrounds the edge of the stage.

The position measuring unit 400 measures the position of each of the battery cells 10 inserted into the cell fixing unit 100, and may automatically measure the insertion position of each of the battery cells 10 at the moment when each of the battery cells 10 is inserted into the cell fixing unit 100. Specifically, the position measuring unit 400 may automatically determine the insertion position for each type of battery cell 10 by measuring the type of battery cell 10 being inserted and the insertion position at which the corresponding battery cell 10 is inserted.

The processor 500 calculates the fixed position of each of the battery cells 10 fixed to the cell fixing unit 100 through the data measured by the position measuring unit 400, and may automatically calculate the fixed position at which each of the battery cells 10 is completely inserted and fixed to the cell fixing unit 100 from the position at the moment when each of the battery cells 10 is inserted into the cell fixing unit 100. In this case, the fixed position of each of the battery cells 10 loaded on the battery cell tray 1 may be automatically calculated, and thus there is an advantageous effect of automatically determining at which position of the battery cell tray 1 a particular battery cell 10 is fixed.

Meanwhile, the battery cell tray 1 according to Embodiment 1 of the present disclosure may further include a frame 200 spaced apart from the cell fixing unit 100, through which battery cells 10 inserted into the cell fixing unit 100 pass, and a connecting member 300 that connects the cell fixing unit 100 and the frame 200.

The frame 200 is a member spaced apart upwardly from the cell fixing unit 100, and may be configured in various ways. For example, the frame 200 may have an angular or circular ring shape spaced apart upwardly from the cell fixing unit 100. In this case, the battery cells 10 may pass through the ring-shaped frame 200 and be inserted into the cell fixing unit 100 located below the frame 200.

The connecting member 300 connects the cell fixing unit 100 and the frame 200, and may be configured in various ways. For example, the connecting member 300 may have a rectangular plate shape extending upward from the cell fixing unit 100 to the frame 200. Additionally, the connecting member 300 may have a rod shape extending upward from the cell fixing unit 100 to the frame 200.

The battery cell tray 1 may be made of various materials. In this case, the cell fixing unit 100, the frame 200, and the connecting member 300 constituting the battery cell tray 1 may all be made of the same material. For example, the cell fixing unit 100, the frame 200, and the connecting member 300 may be made of a metal such as aluminum or a plastic material such as synthetic resin.

Meanwhile, when the frame 200 has a rectangular ring shape, the frame 200 may include a pair of inner surfaces 210, 220 facing each other with the inserted battery cells 10 interposed therebetween. In this case, a position measuring unit 400 may be installed on the first inner surface 210, and a reference surface 220a, which is a position measuring reference for the position measuring unit 400, may be formed on the second inner surface.

Specifically, the position measuring unit 400 may include a barcode scanner 410 that reads the barcode 13 of the battery cell 10 inserted into the cell fixing unit 100 and a position measuring sensor 420 that measures the position of the battery cell 10 inserted into the cell fixing unit 100.

The barcode scanner 410 identifies the ID of the battery cell 10 through the barcode 13 written on the surface of the exterior material 11 at the moment when the battery cell 10 is inserted into the cell fixing unit 100, and may be configured in various ways. For example, the barcode scanner 410 may include a laser diode that acts as a light source and a prism that scans the information of the barcode 13 by scanning a laser beam passing through the barcode 13.

The position measuring sensor 420 measures the insertion position at the moment when the battery cell 10 is inserted into the cell fixing unit 100, and may be configured in various ways. For example, the position measuring sensor 420 may be a LiDAR sensor that measures a distance to the battery cell 10 inserted into the cell fixing unit 100. In this case, the position measuring sensor 420 may measure the insertion position of the battery cell 10 through a pulse laser that is reflected by the battery cell 10 inserted into the cell fixing unit 100 and returned.

Meanwhile, the barcode scanner 410 and the position measuring sensor 420 may be installed in the frame 200. Specifically, the barcode scanner 410 and the position measuring sensor 420 may be installed side by side on the first inner surface 210 of the rectangular ring-shaped frame 200.

At this time, there is no particular limitation on how the barcode scanner 410 and the position measuring sensor 420 are installed on the first inner surface 210. For example, the barcode scanner 410 and the position measuring sensor 420 may be attached to and installed on the first inner surface 210 by an adhesive or adhesive tape. Additionally, the barcode scanner 410 and the position measuring sensor 420 may be fixedly installed on the first inner surface 210 by a fixing member such as a bolt or the like.

Additionally, the barcode scanner 410 and the position measuring sensor 420 may be installed at a position higher than the upper end of the battery cell 10 fixed to the cell fixing unit 100 among the inner surfaces of the frame 200. Specifically, the barcode scanner 410 and the position measuring sensor 420 may be installed side by side at a position higher than the upper end of the battery cell 10 fixed to the cell fixing unit 100 among the first inner surfaces 210 of the frame 200.

In this case, the ID and insertion position of the battery cell 10 inserted into the cell fixing unit 100 are measured at a position higher than the upper end of the battery cells 10 already fixed to the cell fixing unit 100, and thus, even when a plurality of battery cells 10 are fixed to the cell fixing unit 100, the ID and insertion position of the newly inserted battery cell 10 may be determined.

Meanwhile, the processor 500 may calculate the fixed position of each of the battery cells 10 fixed to the cell fixing unit 100 by comparing a distance D2 from the position measuring sensor 420 to the battery cell 10 inserted into the cell fixing unit 100 with a preset reference distance D1. Specifically, the position measuring sensor 420 may measure the distance D2 between the position measuring sensor 420 and the battery cell 10 inserted into the cell fixing unit 100 by irradiating a laser to the battery cell 10 inserted into the cell fixing unit 100.

At this time, the reference distance D1 may be a distance between the position measuring sensor 420 attached to the first inner surface 210 of the frame 200 and the second inner surface 220 facing the first inner surface 210. Specifically, the reference distance D1 is a distance between the position measuring sensor 420 and the reference surface 220a formed on the second inner surface 220, which may be measured in advance by the position measuring sensor 420 and input to the processor 500.

The processor 500 may compare the preset reference distance D1 with the distance D2 between the position measuring sensor 420 and the battery cell 10 inserted into the cell fixing unit 100 to calculate at which position of the cell fixing unit 100 the inserted battery cell 10 is fixed. Specifically, the processor 500 calculates a ratio of a preset reference distance D1 and an insertion distance D2 measured at the moment when the battery cell 10 is inserted into the cell fixing unit 100, and may calculate the fixed position of the battery cell 10 in the cell fixing unit 100 in advance based on the magnitude of the calculated ratio.

In this case, the processor 500 records ID information of all the battery cells 10 fixed to the cell fixing unit 100, and thus the user may determine at what order of fixed position of the cell fixing unit 100 a particular battery cell 10 is fixed to.

### Embodiment 2

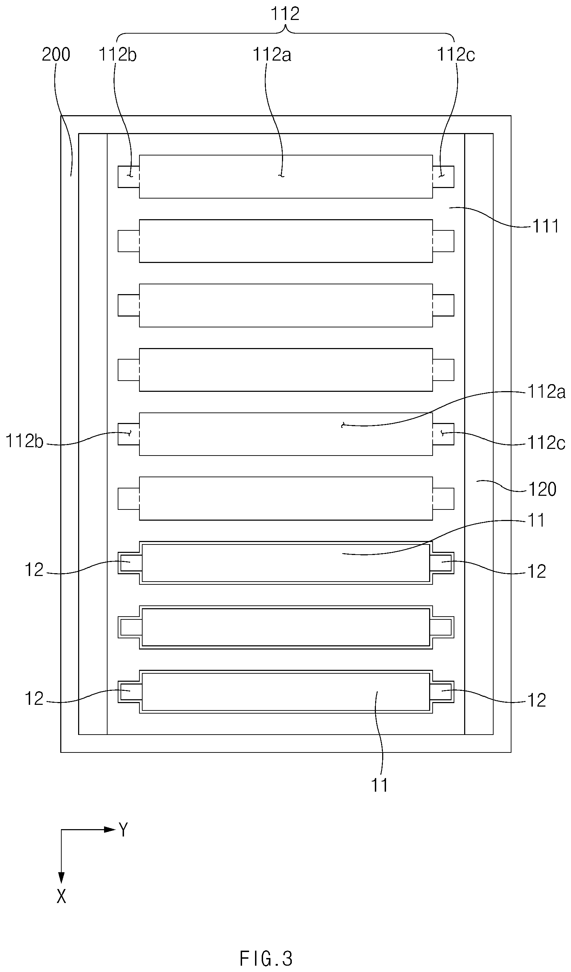

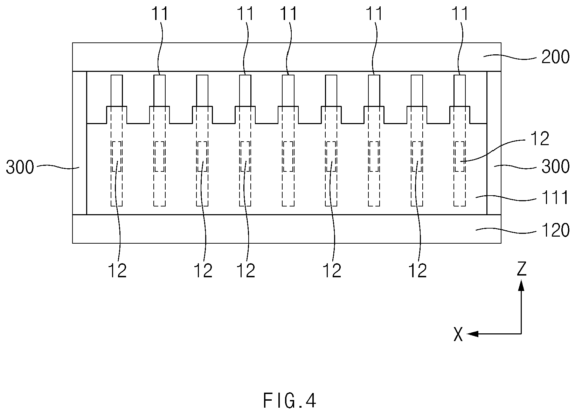

FIG. 3 is a plan view of a battery cell tray according to Embodiment 2 of the present disclosure, and FIG. 4 is a right side view of a battery cell tray according to Embodiment 2 of the present disclosure.

The battery cell tray according to Embodiment 2 of the present disclosure differs from Embodiment 1 in that a coupling groove is formed in the fixing unit of the cell fixing unit. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

Referring to FIGS. 3 and 4, in the battery cell tray 1 according to Embodiment 2 of the present disclosure, the cell fixing unit 100 includes a fixing unit 110 formed with a plurality of coupling grooves 112 into which the battery cells are fitted and a base plate 120 on which the fixing unit 110 is installed. In this case, the battery cells 10 are fixed in a state of being inserted into the coupling grooves 112, and thus, even when the battery cells 10 are transferred by the battery cell tray 1, there is an advantageous effect of preventing the fixed positions of the battery cells 10 from changing.

Here, the fixing unit 110 may include a body portion 111 installed on the base plate 120 and a plurality of coupling grooves 112 formed on the body portion 111. In this case, the plurality of coupling grooves 112 may be arranged in a row along the length direction of the fixing unit 110.

The shape of the coupling groove 112 may correspond to the shape of the battery cell 10 to be inserted. Specifically, when the battery cell 10 is a prismatic battery cell having a cuboidal-shaped exterior material 11 and electrode leads 12 protruding from one side and the other side of the exterior material 11, the coupling groove 112 may include a cuboidal-shaped main groove 112a and lead moving lines 112b, 112c formed on each of one side and the other side of the main groove 112a. In this case, the main groove 112a may correspond to the shape of the exterior material 11, and the lead moving lines 112b, 112c may correspond to the shape of the electrode leads 12 protruding to the outside of the exterior material 11 of the battery cell 10 so that the electrode leads 12 of the battery cell 10 being inserted may pass through.

Meanwhile, the barcode scanner 410 may read the barcode 13 of the battery cell 10 at the moment when the battery cell 10 is inserted into the coupling groove 112 to determine the ID of the battery cell 10, and the position measuring unit 420 may measure the insertion position of the battery cell 10 by measuring the distance D2 to the battery cell 10 at the moment when the battery cell 10 is inserted into the coupling groove 112.

At this time, the processor 500 may calculate the fixed position of the battery cell 10 inserted and fixed into the coupling groove 112 by comparing the distance D2 between the position measuring unit 420 and the battery cell 10 inserted into the coupling groove 112 with the preset reference distance D1.

The reference distance D1 may be a distance between the position measuring sensor 420 attached to the first inner surface 210 of the ring-shaped frame 200 and the second inner surface 220 facing the first inner surface 210. Specifically, the reference distance D1 is a distance between the position measuring sensor 420 and the reference surface 220a formed on the second inner surface 220, which may be measured in advance by the position measuring sensor 420 and input to the processor 500.

The processor 500 may compare the preset reference distance D1 with the distance D2 between the position measuring sensor 420 and the battery cell 10 inserted into the coupling groove 112 to calculate at which position of the coupling groove 112 the inserted battery cell 10 is fixed. Therefore, the processor 500 calculates a ratio of the preset reference distance D1 and the insertion distance D2 measured at the moment when the battery cell 10 is inserted into the coupling groove 112, and may calculate in advance at what order of coupling groove 112 the battery cell 10 is inserted into based on the magnitude of the calculated ratio.

At this time, the processor 500 also records the ID information of the battery cells 10 inserted and fixed into the coupling groove 112, and thus the user may easily determine at what order of coupling groove 112 a particular battery cell 10 is inserted and fixed into.

Meanwhile, the fixing unit 110 may be attached to and installed on the surface of the base plate 120. Specifically, the lower surface of the body portion 111 of the fixing unit 110 may be attached to and installed on the upper surface of the base plate 120.

Here, the body portion 111 may be attached to the base plate 120 in various ways. For example, an adhesive layer made of an adhesive tape or adhesive may be formed between the lower surface of the body portion 111 and the upper surface of the base plate 120. Additionally, the body portion 111 may be fixed in a state of being attached to the base plate 120 by a fixing member such as a bolt or the like.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 1: | Battery cell tray | 10: | Battery cell |
| 11: | Exterior material | 12: | Electrode lead |
| 13: | Barcode | 100 : | Cell fixing unit |
| 110: | Fixing unit | 111 : | Body portion |
| 112: | Coupling groove | 120 : | Base plate |
| 200: | Frame | 210 : | First inner surface |
| 220: | Second inner surface | 300: | Connecting member |
| 400: | Position measuring unit | 410: | Barcode scanner |
| 420: | Position measuring sensor | 500: | Processor |

## Claims

1. A battery cell tray comprising:
a cell fixing unit to which battery cells are fixed;
a position measuring unit that measure a position of each of the battery cells inserted into the cell fixing unit; and
a processor that calculate a fixed position of each of the battery cells fixed to the cell fixing unit through data measured by the position measuring unit.

2. The battery cell tray according to claim 1, further comprising:
a frame spaced apart from the cell fixing unit, through which the battery cells inserted into the cell fixing unit pass; and
a connecting member that connect the cell fixing unit and the frame.

3. The battery cell tray according to claim 2,
wherein the frame comprises a pair of inner surfaces facing each other with the battery cells interposed therebetween.

4. The battery cell tray according to claim 2,
wherein the position measuring unit comprises:
a barcode scanner that reads the barcode of the battery cell inserted into the cell fixing unit; and
a position measuring sensor that measures the position of the battery cell inserted into the cell fixing unit.

5. The battery cell tray according to claim 4,
wherein the position measuring sensor is a LiDAR sensor that measures a distance to the battery cell inserted into the cell fixing unit.

6. The battery cell tray according to claim 4,
wherein the barcode scanner and the position measuring sensor are installed in the frame.

7. The battery cell tray according to claim 6,
wherein the barcode scanner and the position measuring sensor are installed at a position higher than the upper end of the battery cell fixed to the cell fixing unit among the inner surfaces of the frame.

8. The battery cell tray according to claim 7,
wherein the processor calculates the fixed position of each of the battery cells fixed to the cell fixing unit by comparing a distance from the position measuring sensor to the battery cell inserted into the cell fixing unit with a preset reference distance.

9. The battery cell tray according to claim 8,
wherein the reference distance is a distance between the position measuring sensor attached to the first inner surface of the frame and a second inner surface facing the first inner surface.

10. The battery cell tray according to claim 1,
wherein the cell fixing unit comprises:
a fixing unit formed with a plurality of coupling grooves into which the battery cells are fitted; and
a base plate on which the fixing unit is installed.

11. The battery cell tray according to claim 10,
wherein the plurality of coupling grooves are formed in a row along the length direction of the fixing unit.

12. The battery cell tray according to claim 10,
wherein lead moving lines through which the electrode leads of the battery cell pass are formed on each of one side and the other side of the coupling grooves.

13. The battery cell tray according to claim 10,
wherein the fixing unit is attached to and installed on the surface of the base plate.
